# EUROPÄISCHE PATENTSCHRIFT

(11) **EP 0 842 060 B1**
(45) Veröffentlichungstag und Bekanntmachung des Hinweises auf die Patenterteilung: **11.08.1999**
(21) Anmeldenummer: 96913462.6
(22) Anmeldetag: 03.05.1996
(51) Int. Cl.: B60N 2/00

(54) **ANORDNUNG ZUM ERKENNEN DER BELEGUNGSART EINES FAHRZEUGSITZES**
ARRANGEMENT FOR RECOGNISING THE TYPE OF OCCUPATION OF A VEHICLE SEAT
DISPOSITIF PERMETTANT DE RECONNAITRE LE TYPE D'OCCUPATION D'UN SIEGE DE VEHICULE

(30) Priorität: 29.07.1995 DE 19527862
(43) Veröffentlichungstag der Anmeldung: 20.05.1998
(73) Patentinhaber: ROBERT BOSCH GMBH, 70442 Stuttgart (DE)
(72) Erfinder: KURSAWE, Frank, D-70499 Stuttgart (DE); FLAIG, Helmut, D-78664 Eschbronn (DE)
(86) Internationale Anmeldenummer: DE9600770
(87) Internationale Veröffentlichungsnummer: WO9704984

(56) Entgegenhaltungen:
- EP-A- 0 458 102
- DE-C- 4 237 072
- PATENT ABSTRACTS OF JAPAN vol. 018, no. 620 (M-1711), 25.November 1994 & JP,A,06 239173 (MATSUSHITA ELECTRIC IND CO LTD;OTHERS: 01), 30.August 1994,
- PATENT ABSTRACTS OF JAPAN vol. 94, no. 011 & JP,A,06 317676 (MATSUSHITA ELECTRIC IND CO LTD;OTHERS: 01), 15.November 1994,
- PATENT ABSTRACTS OF JAPAN vol. 017, no. 654 (P-1653), 3.Dezember 1993 & JP,A,05 215863 (MATSUSHITA ELECTRIC IND CO LTD), 27.August 1993,
- PATENT ABSTRACTS OF JAPAN vol. 95, no. 009 & JP,A,07 237488 (MATSUSHITA ELECTRIC IND CO LTD;OTHERS: 02), 12.September 1995,

## Beschreibung

### Stand der Technik

Die vorliegende Erfindung betrifft eine Anordnung zum Erkennung der Belegungsart eines Fahrzeugsitzes gemäß den Merkmalen des Oberbegriffs des Anspruchs 1.

Es ist bekennt, daß in Fahrzeugen nicht nur für den Fahrer ein Airbag vorgesehen ist, sondern daß auch dem Beifahrersitz ein Airbag zugeordnet wird. Bei einem Unfall sollte der Beifahrer-Airbag aber nur ausgelöst werden, wenn der Beifahrersitz tatsächlich von einem Insassen besetzt ist. Wenn der Beifahrersitz gar nicht besetzt ist oder lediglich mit einem Gepäckstück belegt ist oder einen Kindersitz trägt, sollte die Auslösung des Airbag unterdrückt werden. Ein in diesen Fällen ausgelöster Airbag verursacht unnötige Reparaturkosten und kann evtl. durch den von ihm im Fahrzeuginnenraum erzeugten zusätzlichen Druckanstieg für andere Fahrzeuginsassen schädlich sein. Gemäß der EP 0 458 102 A1 wird vorgeschlagen, mittels Kraft- und/oder Drucksensoren ein Kraft- und/oder Druckverteilmuster abzuleiten, das genaueren Aufschluß darüber gibt, ob der Beifahrersitz von einer Person oder einem Gepäckstück besetzt ist. Als Kraft- und/oder Drucksensor kommt beispielsweise eine aus der DE 42 37 072 C1 bekannte druckabhängige Widerstandsmatte (Interlink-Matte) in Frage.

Eine Anordnung gemäß den Merkmalen des Oberbegriffs des Anspruchs 1 ist aus Patent Abstracts of Japan, Vol. 018, No. 620 (M-1711), 25.11.1994, JP 62 39 173 bekannt. Dabei sind mehrere Filter vorgesehen, die das Ausgangssignal mindestens eines im Fahrzeugsitz angeordneten Sensors frequenzselektiv zerlegen. Durch Vergleich der frequenzselektiven Signalanteile wird ein Entscheidungskriterium für die Belegung oder Nichtbelegung des Fahrzeugsitzes mit einem Insassen gebildet.

Der Erfindung liegt die Aufgabe zugrunde, eine Anordnung der eingangs genannten Art anzugeben, die ein möglichst zuverlässiges Kriterium erzeugt für die Entscheidung, ob der Fahrzeugsitz von einer Person besetzt ist oder nicht.

### Vorteile der Erfindung

Die gestellte Aufgabe wird erfindungsgemäß durch die Merkmale des Anspruchs 1 gelöst. Vorteilhafte Ausbildungen der Erfindung gehen aus den Unteransprüchen hervor.

Die Erfindung geht von der Erkenntnis aus, daß ein von einer Person besetzter Fahrersitz anderen dynamischen Bewegungen unterliegt als wenn auf ihm ein starrer Gegenstand, z.B. Gepäckstück oder Kindersitz, liegt. Eine Person versetzt den Sitz und damit einen in dem Sitz angeordneten Bewegungssensor durch ihre Eigenbewegung und zudem durch ihren Pulsschlag in Schwingungen anderer Frequenzbereiche als ein an sich starrer Gegenstand. Analysiert man also das Ausgangssignal des Sensors, so dominieren bei einer auf dem Sitz befindlichen Person andere Frequenzbereiche als bei einem starren Gegenstand. Die frequenzabhängige Auswertung des Sensorausgangssignals führt damit zu einer sehr zuverlässigen Aussage darüber, ob der Fahrzeugsitz mit einer Person oder einem starren Gegenstand besetzt ist. Da Fahrzeugbetriebsparameter - beispielsweise die Motordrehzahl oder die Fahrzeuggeschwindigkeit - ebenfalls auf den Belegungssensor im Fahrzeugsitz einwirken, führt es zu einer erheblich zuverlässigeren Entscheidung über die Art der Belegung des Fahrzeugsitzes, wenn man diese Parameter in das aus dem Sensorausgangssignal abgeleitete Entscheidungskriterium einfließen läßt.

### Beschreibung eines Ausführungsbeispiels

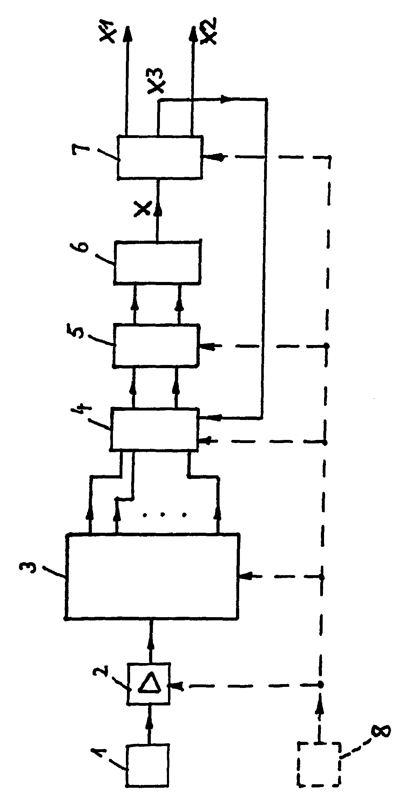

Anhand eines in der Zeichnung dargestellten Ausführungsbeispiels wird nachfolgend die Erfindung näher erläutert. Die einzige Figur zeigt ein Blockschaltbild einer Anordnung, welche erkennt, ob ein Fahrzeugsitz von einer Person besetzt ist oder nicht. Nur wenn sich eine Person auf dem Fahrzeugsitz befindet, er also nicht unbesetzt ist und auch nicht von einem starren Gegenstand (z.B. Gepäckstück oder Kindersitz) belegt ist, soll beispielsweise bei einem Unfall ein Rückhaltesystem (Airbag und/oder Gurtstraffer) ausgelöst oder eine Sitzheizung eingeschaltet werden. Dazu ist der Fahrersitz mit ein oder mehreren Sensoren 1 ausgestattet. Als Sensor kommt beispielsweise ein im Sitz verlegtes Piezokabel in Frage, welches seine Leitungseigenschaften in Abhängigkeit von Schwingungen ändert, denen der Fahrzeugsitz aufgrund einer darauf sitzenden Person oder eines daraufliegenden Gegenstandes ausgesetzt ist. Anstelle eines Piezokabels können auch Sensoren, die nach anderen physikalischen Prinzipien arbeiten - z.B. druckabhängige Widerstandsmatte, kapazitiv wirkende Sensoren, optische Fasern u.a. - eingesetzt werden, die ähnlich auf Schwingungen des Fahrzeugsitzes reagieren.

Das Ausgangssignal des Sensors 1 wird einem Verstärker 2 zugeführt. Daran schließt sich eine Filterbank 3 an, welche die Funktion hat, das Sensorausgangssignal frequenzmäßig zu selektieren. An den Ausgängen der Filterbank 3 liegen somit mehrere Signalanteile des Sensorausgangssignals an, von denen jedes einem eigenen Frequenzbereich zugeordnet ist. Die das Sensorausgangssignal in einzelne Frequenzbereiche zerlegende Filterbank 3 kann aus digitalen oder analogen Tiefpaß- oder Hochpaß- oder Bandpaß- oder Bandsperrfiltern aufgebaut sein. Die frequenzselektiven Signalanteile der Filterbank 3 werden einer Auswahlschaltung 4 zugeführt.

Diese greift aus allen frequenzselektiven Signalanteilen der Filterbank 3 zwei heraus. Zu jedem der beiden ausgewählten frequenzselektiven Signalanteile bildet ein Schaltblock 5 entweder den Mittelwert oder den Effektivwert oder ermittelt den Spitzenwert, den Mittelwert oder beliebige andere für die weitere Signalverarbeitung geeignete Signalwerte. Die an den Ausgängen des Schaltblocks 5 erscheinenden Werte der beiden ausgewählten frequenzselektiven Signalanteile werden in einem nachfolgenden Schaltblock 6 miteinander verglichen. Das heißt, hier wird entweder der Quotient aus beiden Signalanteilen oder deren Differenz gebildet. Am Ausgangssignal X des Schaltblocks 6 kann dann abgelesen werden, ob z.B. der Signalanteil des tieferen Frequenzbereichs größer oder kleiner war als der zweite Signalanteil des höheren Frequenzbereichs. Experimentell ist festgestellt worden, daß bei Belegung des Fahrzeugsitzes mit einer Person im Sensorausgangssignal die tieferen Frequenzanteile gegenüber den höheren dominieren, und daß bei anderen Gegenständen eher die höherfrequenten Signalanteile gegenüber den niederfrequenten hervortreten. Für den Fall, daß der niedrigere Frequenzanteil überwiegt und im Schaltblock 6 bei einer Quotientenbildung der niederfrequente Signalanteil im Zähler erscheint, nimmt das Ausgangssignal X des Schaltblocks 6 einen Wert größer 1 an. Wird ein Differenz-Vergleich zwischen beiden Signalanteilen durchgeführt, so ist das Ausgangssignal X des Schaltblocks 6 positiv, wenn der tieferfrequente Signalanteil der Subtrahend und der höherfrequente Signalanteil der Minuend ist. Das Signal X gelangt an einen Schwellwertentscheider 7, der zwei Schwellen S1 und S2 besitzt, wobei S1 größer als S2 ist. Liegt nun das Signal X oberhalb der Schwelle S1, so signalisiert der Schwellwertentscheider 7 mit seinem Signal X1, daß der Fahrzeugsitz von einer Person belegt ist. Unterschreitet dagegen das Signal X den unteren Schwellwert S2, so gibt der Schwellwertentscheider das Signal X2 ab, was bedeutet, daß der Fahrzeugsitz gar nicht oder von einem anderen Gegenstand belegt ist. Fällt das Signal X in den Bereich zwischen den beiden Schwellen S1 und S2, so generiert der Schwellwertentscheider ein Signal X3. Der Bereich zwischen den beiden Schwellwerten S1 und S2 ist ein Unsicherheitsbereich, der keine exakte Aussage über die Belegung des Fahrzeugsitzes mit einer Person zuläßt. Dann ist es sinnvoll, einen weiteren Vergleich zwischen zwei anderen frequenzselektiven Signalanteilen aus der Filterbank durchzuführen. Das Ausgangssignal X3 des Schwellwertentscheiders 7 signalisiert der Auswahlschaltung 4, daß ein solcher Zustand vorliegt. Führt auch ein erneuter Vergleich zweier frequenzselektiver Signalanteile zu keinem eindeutigen Ergebnis X1 oder X2, wird eine weitere Vergleichsprozedur durchgeführt, wobei die Schwellwerte in den einzelnen Vergleichsprozeduren unterschiedlich sein können.

Die Verwendung zweier Schwellen S1 und S2 im Schwellwertentscheider 7 verringert die Wahrscheinlichkeit von Fehlentscheidungen erheblich. Ist aber keine sehr enge Toleranz bei der Entscheidung, ob der Fahrzeugsitz von einer Person belegt ist oder nicht, gefragt, kann ein Schwellwertentscheider 7 mit nur einer einzigen Schwelle vorgesehen werden.

Statt wie im vorliegenden Ausführungsbeispiel beschrieben, zusätzliche Vergleiche zwischen frequenzselektiven Signalanteilen zeitlich nacheinander durchzuführen, kann die Auswahlschaltung 4 auch mehrere Paare von frequenzselektiven Signalanteilen des Filterblocks 3 auswählen, und es können mehrere Paare von frequenzselektiven Signalanteilen gleichzeitig miteinander verglichen und einem Schwellwertentscheider zugeführt werden. Ein solcher Schwellwertentscheider, der für jedes Signalanteil-Paar nur eine Schwelle bereitzustellen bräuchte, würde für jedes Signalanteil-Paar eine Entscheidung über die Belegung oder Nichtbelegung des Fahrzeugsitzes mit einem Insassen treffen. Anhand aller vom Schwellwertentscheider gelieferten Ausgangssignale müßte dann noch endgültig entschieden werden, ob der Belegt- oder der Nichtbelegt-Zustand der wahrscheinlichste ist.

Die Zuverlässigkeit der endgültigen Entscheidung, ob der Fahrzeugsitz mit einem Insassen belegt ist oder nicht, kann dadurch noch gesteigert werden, indem noch andere äußere, vom Sensorsignal unabhängige Entscheidungskriterien (z.B. Einrasten/Nichteinrasten des Gurtschlosses) mit herangezogen werden.

Da die aktuellen Fahrzeugbetriebsparameter, wie Motordrehzahl oder Fahrzeuggeschwindigkeit, auch Auswirkungen auf den Belegungssensor im Fahrzeugsitz haben, weil sie den Sitz in Schwingungen versetzen, ist es zweckmäßig, die Parameter Motordrehzahl und/oder Fahrzeuggeschwindigkeit als Steuergrößen für einige Schaltungen in der zuvor beschriebenen Anordnung heranzuziehen. Mit dem Block 8 ist in der Figur die Motordrehzahl und/oder die Fahrzeuggeschwindigkeit angedeutet. Sie wird als Steuersignal, wie durch die strichlierten Verbindungslinien angedeutet, dem Verstärker 2 der Filterbank 3, der Auswahlschaltung 4, der Schaltung 5 für die Bildung z.B. des Mittelwertes oder des Spitzenwertes oder des Effektivwertes und dem Schwellwertentscheider 7 zugeführt. Es müssen aber nicht alle die genannten Schaltungselemente durch den Fahrzeugbetriebsparameter gesteuert werden. Durch die Steuerung des Verstärkers 2 können Pegelschwankungen des Sensorausgangssignals ausgeglichen werden, die aufgrund der von den genannten Fahrzeugbetriebsparametern abhängigen Schwingungen des Fahrzeugsitzes hervorgerufen werden. Durch den Einfluß der Fahrzeugbetriebsparameter kann es erforderlich sein, die Filtercharakteristiken (z.B. deren Ordnung, Welligkeit oder Eck-/Grenzfrequenzen) in der Filterbank 3 zu verändern. Ebenso kann es erforderlich sein, in Abhängigkeit von den Fahrzeugbetriebsparametern eine bestimmte Auswahl von Frequenzbereichen in der Auswahlschaltung 4 zu treffen. Auch können die Fahrzeugbetriebsparameter darauf Einfluß haben, ob es günstiger ist, die Mittelwerte oder die Spitzenwerte oder die Effektivwerte oder andere für die Signalauswertung geeignete Signalwerte der ausgewählten Signalanteile miteinander zu vergleichen. Deshalb ist auch das Steuersignal von Block 8 dem Schaltungsblock 5 zugeführt. Schließlich sollte auch die Lage der Schwellen im Schwellwertentscheider 7 in Abhängigkeit von einem oder mehreren Betriebsparametern optimiert werden.

## Patentansprüche

1. Anordnung zum Erkennen der Belegungsart eines Fahrzeugsitzes, welche mindestens einen auf Bewegungen eines den Fahrzeugsitz belegenden Insassen oder Gegenstandes reagierenden Sensor (1) und Mittel (3) aufweist, die das Sensorausgangssignal frequenzselektiv in mehrere Signalanteile zerlegen, und weitere Mittel (4, 6, 7) vorhanden sind, welche durch Vergleich der frequenzselektiven Signalanteile ein Entscheidungskriterium für die Belegung oder Nichtbelegung des Fahrzeugsitzes mit einem Insassen bilden, dadurch gekennzeichnet, daß die Auswahl der frequenzselektiven Signalanteile in Abhängigkeit von einem oder mehreren Fahrzeugbetriebsparametern, die einen Einfluß auf das Sensorausgangssignal haben, erfolgt.

2. Anordnung nach Anspruch 1, dadurch gekennzeichnet, daß die Mittel (3) für die frequenzselektive Zerlegung des Sensorausgangssignals Filter sind, welche eine Tiefpaß-Hochpaß-Bandpaß- oder Bandsperrcharakteristik aufweisen.

3. Anordnung nach Anspruch 1, dadurch gekennzeichnet, daß ein Vergleich der Mittelwerte der frequenzselektiven Signalanteile erfolgt.

4. Anordnung nach Anspruch 1, dadurch gekennzeichnet, daß ein Vergleich der Spitzenwerte der frequenzselektiven Signalanteile erfolgt.

5. Anordnung nach Anspruch 1, dadurch gekennzeichnet, daß ein Vergleich der Effektivwerte der frequenzselektiven Signalanteile erfolgt.

6. Anordnung nach einem der Ansprüche 1, 3, 4, 5, dadurch gekennzeichnet, daß eine Einrichtung (6) vorgesehen ist, welche zum Vergleich zweier frequenzselektiver Signalanteile den Quotienten aus beiden bildet.

7. Anordnung nach einem der Ansprüche 1, 3, 4, 5, dadurch gekennzeichnet, daµ eine Einrichtung (6) vorgesehen ist, welche zum Vergleich zweier frequenzselektiver Signalanteile die Differenz aus beiden bildet.

8. Anordnung nach einem der vorhergehenden Ansprüche, dadurch gekennzeichnet, daß ein Schwellwertentscheider (7) vorhanden ist, der bei Überschreiten bzw. Unterschreiten mindestens einer vorgebbaren Schwelle durch das aus dem Vergleich zweier frequenzselektiver Signalanteile hervorgehende Vergleichssignal signalisiert, ob der Fahrzeugsitz von einem Insassen besetzt ist oder nicht.

9. Anordnung nach einem der Ansprüche 1, 6 oder 7, dadurch gekennzeichnet, daß nach einem ersten Vergleich zwischen zwei frequenzselektiven Signalanteilen ein oder mehrere weitere Vergleiche zwischen anderen frequenzselektiven Signalanteilen erfolgen.

10. Anordnung nach einem der Ansprüche 1, 6 oder 7, dadurch gekennzeichnet, daß mehrere Vergleiche zwischen unterschiedlichen frequenzselektiven Signalanteilen gleichzeitig durchgeführt werden.

11. Anordnung nach Anspruch 8, dadurch gekennzeichnet, daß die Lage der Entscheider-Schwelle(n) in Abhängigkeit von ein oder mehreren Fahrzeugbetriebsparametern erfolgt, die einen Einfluß auf das Sensorausgangssignal haben.

12. Anordnung nach Anspruch 11, dadurch gekennzeichnet, daß die Motordrehzahl ein das Sensorausgangssignal beeinflussender Fahrzeugbetriebsparameter ist.

13. Anordnung nach Anspruch 11, dadurch gekennzeichnet, daß die Fahrzeuggeschwindigkeit ein das Sensorausgangssignal beeinflussender Fahrzeugbetriebsparameter ist.

## Claims

1. Arrangement for recognizing the type of occupation of a vehicle seat which has at least one sensor (1) responding to movements of an occupant or item occupying the vehicle seat and has means (3) which break down the sensor output signal frequency-selectively into a number of signal components, and there are further means (4, 6, 7) which, by comparing the frequency-selective signal components, form a decision criterion for the occupation or non-occupation of the vehicle seat by an occupant, characterized in that the selection of the frequency-selective signal components takes place in dependence on one or more vehicle operating parameters which have an influence on the sensor output signal.

2. Arrangement according to Claim 1, characterized in that the means (3) for the frequency-selective breaking-down of the sensor output signal are filters which have a low-pass, high-pass, band-pass or band-stop characteristic.

3. Arrangement according to Claim 1, characterized in that a comparison of the mean values of the frequency-selective signal components takes place.

4. Arrangement according to Claim 1, characterized in that a comparison of the peak values of the frequency-selective signal components takes place.

5. Arrangement according to Claim 1, characterized in that a comparison of the effective values of the frequency-selective signal components takes place.

6. Arrangement according to one of Claims 1, 3, 4, 5, characterized in that there is provided a device (6) which, for comparing two frequency-selective signal components, forms the quotient from the two.

7. Arrangement according to one of Claims 1, 3, 4, 5, characterized in that there is provided a device (6) which, for comparing two frequency-selective signal components, forms the difference from the two.

8. Arrangement according to one of the preceding claims, characterized in that there is a threshold-value decision circuit (7) which signals whether the vehicle seat is or is not occupied by an occupant when the comparison signal resulting from the comparison between two frequency-selective signal components goes above or below at least one predeterminable threshold.

9. Arrangement according to one of Claims 1, 6 or 7, characterized in that, after a first comparison between two frequency-selective signal components, one or more further comparisons are performed between other frequency-selective signal components.

10. Arrangement according to one of Claims 1, 6 or 7, characterized in that a number of comparisons are carried out simultaneously between different frequency-selective signal components.

11. Arrangement according to Claim 6, characterized in that the position of the decision-circuit threshold(s) is dependent on one or more vehicle operating parameters which have an influence on the sensor output signal.

12. Arrangement according to Claim 11, characterized in that the engine speed is one vehicle operating parameter influencing the sensor output signal.

13. Arrangement according to Claim 11, characterized in that the vehicle speed is one vehicle operating parameter influencing the sensor output signal.

## Revendications

1. Dispositif pour reconnaître le type d'occupation d'un siège de véhicule, comportant au moins un capteur (1) réagissant aux mouvements d'un occupant ou d'un objet dans le siège du conducteur et des moyens (3) qui décomposent le signal de sortie du capteur, de manière sélective en fréquence, en plusieurs composantes de signal ainsi que d'autres moyens (4, 6, 7) qui, par comparaison des composantes de signal, sélectives en fréquence, forment un critère de décision correspondant à l'occupation ou à la non-occupation du siège du conducteur par un occupant,
caractérisé en ce que
la sélection des composantes de signal, sélectives en fréquence, se fait en fonction d'un ou plusieurs paramètres de fonctionnement du véhicule agissant sur le signal de sortie du capteur.

2. Dispositif selon la revendication 1,
caractérisé en ce que
les moyens (3) de décomposition sélective en fréquence du signal de sortie du capteur sont des filtres ayant une caractéristique de filtres passe-bas, de filtres passe-haut ou de filtres passe-bande ou encore de bandes de blocage.

3. Dispositif selon la revendication 1,
caractérisé par
une comparaison des valeurs moyennes des composantes de signal, sélectives en fréquence.

4. Dispositif selon la revendication 1,
caractérisé par
une comparaison des valeurs maximales des composantes de signal, sélectives en fréquence.

5. Dispositif selon la revendication 1,
caractérisé par
une comparaison des valeurs effectives des composantes de signal, sélectives en fréquence.

6. Dispositif selon l'une quelconque des revendications 1 à 3, 4, 5,
caractérisé par
une installation (6) qui forme le quotient de deux composantes de signal, sélectives en fréquence, pour les comparer.

7. Dispositif selon l'une quelconque des revendications 1 à 3, 4, 5,
caractérisé par
une installation (6) qui forme la différence des deux composantes de signal sélectives en fréquence pour les comparer.

8. Dispositif selon l'une quelconque des revendications précédentes,
caractérisé par
un décideur de seuil (7) qui, en cas de dépassement vers le haut ou vers le bas d'au moins un seuil prédéterminé par le signal de comparaison résultant de la comparaison de deux composantes de signal sélectives en fréquence, indique si le siège du conducteur est occupé ou non occupé.

9. Dispositif selon l'une quelconque des revendications 1 à 6 ou 7
caractérisé en ce qu'
après une première comparaison entre deux composantes de signal, sélectives en fréquence, il fait une ou plusieurs autres comparaisons entre d'autres composantes de signal, sélectives en fréquence.

10. Dispositif selon l'une quelconque des revendications 1 à 6 ou 7
caractérisé en ce qu'
il effectue simultanément plusieurs comparaisons entre les composantes de signal, différentes, sélectives en fréquence.

11. Dispositif selon la revendication 8,
caractérisé en ce que
la position des seuils de décision est fixée en fonction d'un ou plusieurs paramètres de fonctionnement du véhicule qui ont de l'influence sur le signal de sortie du capteur.

12. Dispositif selon la revendication 11,
caractérisé en ce que
le régime du moteur (vitesse de rotation) est un paramètre de fonctionnement du véhicule qui influence le signal de sortie du capteur.

13. Dispositif selon la revendication 11,
caractérisé en ce que
la vitesse du véhicule est un paramètre de fonctionnement du véhicule qui influence le signal de sortie du capteur.
